# EUROPÄISCHE PATENTSCHRIFT

(11) **EP 2 836 354 B1**
(45) Veröffentlichungstag und Bekanntmachung des Hinweises auf die Patenterteilung: **08.06.2016**
(21) Anmeldenummer: 13720282.6
(22) Anmeldetag: 15.04.2013
(51) Int. Cl.: B29C 70/08, B29D 29/00, B21D 22/02, B29L 31/30

(54) **VERFAHREN ZUR HERSTELLUNG EINES HALBZEUGS ODER BAUTEILS UMFASSEND EINEN METALLTRÄGER UND EINE AUSHÄRTBARE BESCHICHTUNG MIT FASERVERSTÄRKTEM KUNSTSTOFF**
METHOD FOR PRODUCING A SEMI-FINISHED PRODUCT OR COMPONENT COMPRISING A METAL SUBSTRATE AND A COATING OF FIBRE-REINFORCED PLASTIC
PROCÉDÉ DE FABRICATION D'UN DEMI-PRODUIT OU D'UN COMPOSANT À BASE D'UN SUPPORT MÉTALLIQUE ET D'UN REVÊTEMENT À BASE DE PLASTIQUE RENFORCÉ EN FIBRES DE VERRE

(30) Priorität: 13.04.2012 EP 12164199
(43) Veröffentlichungstag der Anmeldung: 18.02.2015
(73) Patentinhaber: voestalpine Stahl GmbH, 4020 Linz (AT)
(72) Erfinder: ANDROSCH, Franz, A-4181 Oberneukirchen (AT); EYßELL, Carola, A-4225 Luftenberg (AT); STRAUSS, Bernhard, A-4060 Leonding (AT); WALCH, Christian, A-4060 Leonding (AT)
(74) Vertreter: Jell, Friedrich
(86) Internationale Anmeldenummer: PCT/EP2013/057816
(87) Internationale Veröffentlichungsnummer: WO 2013/153229

(56) Entgegenhaltungen:
- EP-A2- 1 557 342
- DE-A1-102008 039 869
- US-A- 4 390 489
- US-A- 4 545 105
- US-A1- 2004 221 953

## Beschreibung

Die Erfindung betrifft ein Verfahren zur Herstellung eines Halbzeugs oder Bauteils, bei dem auf einen Metallträger, insbesondere einem Blech, eine aushärtbare Beschichtung mit faserverstärktem Kunststoff aufgebracht, und der beschichtete Metallträger in einem weiteren Schritt zu einem Halbzeug oder Bauteil umgeformt, insbesondere tiefgezogen oder gebogen, wird.

Aus dem Stand der Technik sind Hybridwerkstoffe, aufweisend mehrere übereinanderliegende Metallschichten, jeweils mit vollflächig faserverstärkten unidirektionalen Prepreg-Lagen beschichtet, bekannt (DE19956394B4), die nach einer Umformung des Hybridwerkstoffs zu einem Profil ausgehärtet werden. Ein derartiges Verfahren ist jedoch nachteilig vergleichsweise empfindlich auf vorzeitige Aushärtung der Prepreg-Schicht, bevor der Hybridwerkstoff seine endgültige Form durch sein Umformen eingenommen hat. Dies kann sich insbesondere in einer verminderten Formgenauigkeit des umgeformten Hybridwerkstoffs samt Beschädigungen am faserverstärkten Kunststoff (FVK) bzw. vorimprägnierten Carbonfasern (CFK-Prepreg) erweisen. Ein reproduzierbares Verfahren kann auf diese Weise also nicht sichergestellt werden. Außerdem ist die Durchführung eines Verfahrens unter Verwendung unausgehärteter Prepreg-Schichten vergleichsweise aufwendig. Zudem erfordern derartige Hybridwerkstoffe einen vergleichsweise hohen Materialbedarf an faserverstärktem Kunststoff. Kostengünstige Halbzeuge oder Bauteile sind durch solch ein Verfahren nicht herstellbar.

Außerdem ist es für die Herstellung eines faserverstärkten Halbzeugs oder Bauteils bekannt (EP1557342A2, DE102008039869A1), ein Stahlblech zunächst umzuformen und in einem weiteren Schritt mit einem ausgehärteten FVK-Teil partiell zu versehen bzw. damit zu beschichten. Die voneinander getrennten Verfahrensschritte, nämlich Formgebung des Metallträgers und Formgebung des FVK-Teils, samt ihrem abschließenden Verbinden, beispielsweise mit Bolzen (DE102009009112A1), sind vergleichsweise aufwendig durchzuführen und erfordern zudem kostenintensive Halbzeuge bzw. Bauteile, zumal dieses Verfahren eines vergleichsweise hohen Automatisierungsaufwands bedarf.

Außerdem ist aus dem Stand der Technik bekannt (US4390489A, US4545105A), einen Metallträger höchstens bereichsweise mit einem thermoplastischen Faserverbundwerkstoff zu versehen und mit erhitzter Beschichtung umzuformen.

Es ist daher die Aufgabe der Erfindung, ausgehend vom eingangs geschilderten Stand der Technik, das Herstellungsverfahren für ein verstärktes Halbzeug oder Bauteil nicht nur zu vereinfachen, sondern auch robust zu gestalten, um somit auch eine hohe Reproduzierbarkeit des Verfahrens zu erlangen. Außerdem soll das Verfahren einem einfach zu automatisierenden Verfahrensablauf zugänglich sein.

Die Erfindung löst die gestellte Aufgabe dadurch, dass der Metallträger höchstens bereichsweise beschichtet wird und dem Umformen erst dann unterworfen wird, wenn seine Beschichtung in ihrer Aushärtung wenigstens eine blockfeste Oberfläche ausbildet, wobei der beschichtete Metallträger derart umgeformt wird, dass sich dessen Umformradien folgenden plastischen Formänderungen im Wesentlichen, vorzugsweise ausschließlich, in seinen beschichtungsfreien Bereichen ausbilden.

Wird der Metallträger dem Umformen erst dann unterworfen wird, wenn seine Beschichtung in ihrer Aushärtung wenigstens eine blockfeste Oberfläche ausbildet, kann das Verfahren gegenüber unvermeidbaren Aushärtereaktionen der FVK-Beschichtung robuster ausgebildet werden, weil selbst Aushärtereaktionen der Beschichtung im Verfahren zugelassen werden. Im Gegensatz zum Stand der Technik müssen erfindungsgemäß auch Lagerzeiten des Metallträgers weniger streng beachtet werden, um damit Eigenschaftsverluste der Polymermatrix durch Überschreiten des Verarbeitungszeitraums in Kauf nehmen zu müssen. Dadurch kann sich auch eine Entspannung im Verfahrensablauf ergeben, insbesondere weil die Verfahrensschritte Beschichtung und Umformen voneinander zeitlich unabhängiger erfolgen können, was gerade für ein Tiefziehen oder Biegen des Metallträgers zu dessen Formgebung von Vorteil sein kann. Der blockfeste Zustand der Oberfläche der Beschichtung kann nämlich auch nach der Umformung eine saubere Trennung von beschichtetem Metallträger und Werkzeug sicherstellen, wodurch hohe Reproduzierbarkeit und vergleichsweise einfache Automatisierung des Verfahrens möglich werden können. Besonders kann sich das erfindungsgemäße Verfahren zudem dadurch auszeichnen, dass der Metallträger hinsichtlich mindestens einer seiner Trägerseiten höchstens bereichsweise beschichtet wird, um damit die plastische Verformbarkeit des Metallträgers im Wesentlichen zu erhalten. Vergleichsweise hohen Umformgraden kann zudem gefolgt werden, wenn der Metallträger derart umgeformt wird, dass sich dessen Umformradien folgende plastische Formänderung im Wesentlichen in seinen beschichtungsfreien Bereichen ausbilden. Diese beschichtungsfreien Trägerbereiche können nämlich plastischen Verformungen weitgehend unbeeinträchtigt von der FVK-Beschichtung folgen. Dies umso mehr, wenn sich die plastischen Formänderungen ausschließlich in diesen beschichtungsfreien Bereichen ausbilden. Selbst anspruchsvolle Konturen, beispielsweise die eines Schwellers oder Längsträgers eines Kraftfahrzeugs, können damit in den Metallträger formgenau eingebracht werden. Außerdem kann selbst die zwar blockfest jedoch nicht vollständig ausgehärtete bzw. höchstens teilausgehärtete FVK-Beschichtung eine gewisse eigene plastische Verformbarkeit zulassen und damit positiv zum Umformverhalten des Metallträgers beitragen, wodurch selbst engen Radien versagensfrei gefolgt werden kann. Zugleich können sich die beschichteten Trägerbereiche durch besonders hohe Festigkeitswerte auszeichnen und der Metallträger während des Umformens und auch nach dem Umformen mechanisch stabilisieren. Erfindungsgemäß kann somit ein hoher Grad an plastischem Formänderungsvermögen mit hohen mechanischen Festigkeitswerten kombiniert und zugleich eine vergleichsweise einfache Herstellungsvorschrift für den faserverstärkten Metallträger, vorzugsweise Stahlbleche, angegeben werden.

Selbstverständlich kann der Metallträger aus Blechen mit einem Eisen-, Aluminium- oder Magnesiumwerkstoff, oder dergleichen bzw. den Legierungen daraus bestehen. Im Allgemeinen wird erwähnt, dass der faserverstärkte Kunststoff (FVK) eine thermoplastische oder duroplastische Kunststoffmatrix in Kombination mit anorganischen oder organischen Verstärkungsfasern, wie z.B. Glas, Basalt, Kohlenstoff oder Aramid als Endlos-, Lang- oder Kurzfaser, aufweisen bzw. daraus bestehen kann. Die Haftung kann verbessert werden, wenn eine chemisch vernetzende Zwischenschicht verwendet wird, die dem faserverstärkten Kunststoff als Matrix dienen kann. Weiter wird im Allgemeinen erwähnt, dass unter blockfest verstanden wird, dass die Oberfläche der Beschichtung nicht mehr klebend ist. Dies ist auch dann der Fall, wenn diese Oberfläche der Beschichtung unter Druck auf eine andere Oberfläche, beispielsweise von einem Umformwerkzeug, aufgedrückt wird. In anderen Worten: die aushärtbare Beschichtung ist vor dem Umformen zumindest teilausgehärtet und nicht mehr klebend.
Das erfindungsgemäße Verfahren kann sich insbesondere auch dann auszeichnen, wenn kohlenstofffaserverstärkter Kunststoff (CFK) als faserverstärkter Kunststoff (FVK) mit insbesondere einer duroplastischen Matrix auf den Metallträger aufgebracht wird.
Ein kostengünstiges und dennoch hochfestes Halbzeug oder Endprodukt kann geschaffen werden, wenn vorimprägnierte Carbonfasern aufgebracht werden. Damit kann nämlich ein, den Anforderungen entsprechend optimiertes und hochfestes Halbzeug bzw. Endprodukt bei vergleichsweise geringer Erhöhung dessen Gewichts hergestellt werden. Andere vorimprägnierte Fasern sind vorstellbar, beispielsweise Glasfasern, Aramidfasen - jedoch haben sich Carbonfasern mit einer duroplastischen Matrix, aufgebracht auf einem Stahlblech, für ein Strukturbauteil eines Kraftfahrzeugs, insbesondere eines Schwellers oder Längsträgers, als besonders vorteilhaft hinsichtlich erreichbarer Festigkeitswerte bei vertretbaren Herstellkosten herausgestellt.

Wird faserverstärkter Kunststoff mit einer chemisch vernetzten Zwischenschicht auf den Metallträger aufgebracht, kann bereits ein teilweise ausgehärteter faserverstärkter Kunststoff in einen vergleichsweise definierten Aushärtezustand aufgebracht und damit die Reproduzierbarkeit des Verfahrens erhöht werden. Zudem kann damit die Haftung verbessert werden, insbesondere wenn diese Zwischenschicht dem faserverstärkten Kunststoff als Matrix dienen kann.

Wird der Langfasern aufweisende faserverstärkte Kunststoff (FVK) auf den Metallträger aufgebracht, kann die Beschichtung eines Metallträgers vergleichsweise rasch durchgeführt werden. Somit können die Herstellungskosten aufgrund kurzer Produktionszeiten vermindert werden. Ein derartiges Aufbringen der Langfaserbeschichtung ist mit Hilfe von Extrusion, Pultrusion, Spritzbeschichtung oder Schablonenbeschichtung denkbar.

Alternativ zu den Langfasern kann die Beschichtung auch dann schnell durchgeführt werden, wenn ein Gewebe oder Gelege des faserverstärkten Kunststoffs (FVK) in zugeschnittener Form auf den Metallträger aufgebracht wird. Mit solch einer Matrize, die entsprechend den beschichtungsfreien Trägerbereichen Aussparungen aufweist, kann außerdem ein kontinuierliches Verfahren zur Herstellung von kostengünstigem Halbzeugen oder Endprodukten ermöglicht werden.

Das Gewebe oder Gelege kann entweder mit der Kunststoffmatrix vorimprägniert auf den Metallträger aufgebracht oder nach dem Aufbringen auf den Metallträger mit der Kunststoffmatrix imprägniert werden. Für eine Automatisierung des Herstellverfahrens hat sich dabei insbesondere ein mit der Kunststoffmatrix imprägniertes Gewebe zum Auflegen auf den Metallträger ausgezeichnet.

Wird die Beschichtung auf den metallisch und/oder organisch vorbeschichteten Metallträger, eventuell unter Vorbehandlung mit einem Haftvermittler, aufgebracht, kann die Gefahr eines Versagens der stoffschlüssigen Verbindung zwischen Metallträger und Beschichtung beim Umformen deutlich verringert werden. Die Reproduzierbarkeit des Verfahrens und dessen Parameter kann damit erhöht werden.

Außerdem kann mit einer derartigen Vorbehandlung die Resistenz gegenüber Wasser, Chemikalien und klimatischen Einflüssen und zusätzlich auch ein verbesserter Korrosionsschutz geschaffen werden.

Werden mehrere Lagen an Gewebe oder Gelege für einen insbesondere multidirektionalen Schichtaufbau des faserverstärkten Kunststoffs (FVK) übereinander gelegt, kann die mechanische Festigkeit des Halbzeugs oder Endprodukts erheblich verbessert werden.

Zur Erweiterung des blockfesten Bereiches und zur Vermeidung von eventuellen Anhaftungen am Umformwerkzeug kann vor dem Umformen auf die Beschichtung eine Trennschicht aufgebracht werden. Beispielsweise kann sich für solch eine Trennschicht beschichtetes Papier z.B. Backpapier auszeichnen.

Wird die aushärtbare Beschichtung drucklos vorgeliert und in einem weiteren Schritt an den Metallträger angedrückt wird, um diese auf den Metallträger aufzubringen, kann der Austritt an Kunststoff aus der Faserverstärkung reduziert und damit vermieden werden, dass dieser Kunststoff in Biegebereiche des Metallträgers unkontrolliert vordringt. Durch die im Zuge des Vorgelierens erzielte höhere Viskosität kann nämlich der Kunststoffaustritt vergleichsweise stark reduziert werden. Mit einer Schädigung des faserverstärkten Kunststoffs im Zuge des Umformens des Metallträgers muss daher nicht gerechnet werden. Zudem kann eine derart drucklos vorgelierte Beschichtung keine reduzierte Haftungseigenschaft aufweisen, was ein mechanisch belastbares Halbzeug oder Bauteil ermöglichen kann.

Besonders vorteilhaft kann das erfindungsgemäße Verfahren auch zur Herstellung eines tragenden Strukturbauteils verwendet werden, wobei sich dies insbesondere auch für einen Schweller oder Längsträger eines Kraftfahrzeugs auszeichnen konnte.

In den Figuren wird beispielsweise das erfindungsgemäße Verfahren näher dargestellt. Es zeigen
- Fig. 1: einen Verfahrensablauf mit auf einem Metallträger aufgelegtem faserverstärkten Kunststoff (FVK),
- Fig. 2: einen Verfahrensablauf mit einem Metallträger, aufweisend aufgebrachten faserverstärkten Kunststoff (FVK) und
- Fig. 3: eine abgerissene Schnittansicht auf ein nach den Figuren 1 und 2 dargestelltes Bauteil.

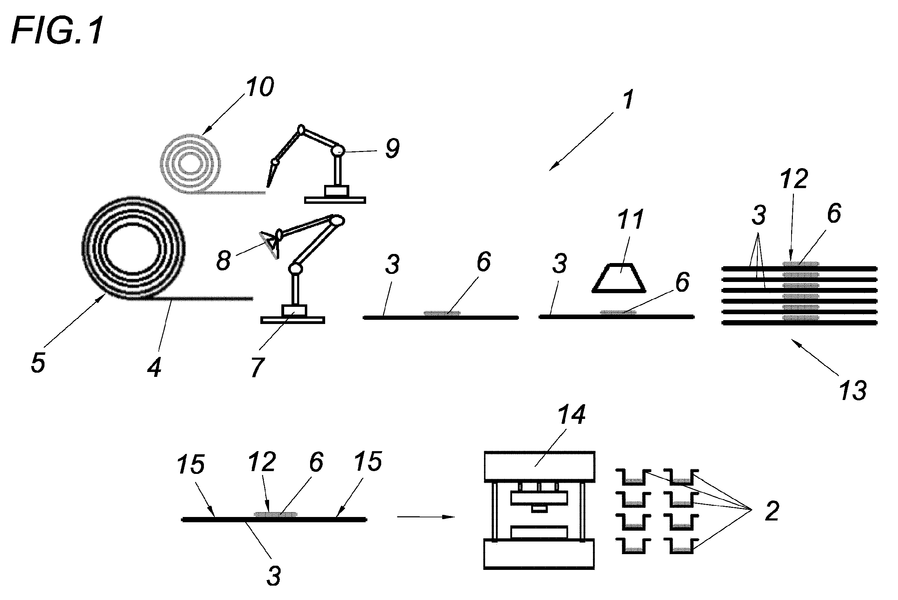

Gemäß dem nach Fig. 1 dargestellten Verfahrensablauf 1 zur Herstellung eines Bauteils 2 wird im ersten Schritt auf einen Metallträger 3, der von einem Coil 4 aus Stahlblech 5 abgetrennt wird, eine aushärtbare Beschichtung 6 mit faserverstärktem Kunststoff (FVK) aufgebracht. Der Metallträger 3 wird auf dieser zu beschichtenden Seite zuvor eventuell noch gereinigt bzw. chemisch vorbehandelt, was allerdings nicht näher dargestellt worden ist. Zum Aufbringen der Beschichtung 6 ist ein Roboter 7 vorgesehen, der einen Zuschnitt 8 vom Roboter 9 aufnimmt. Der Roboter 9 schneidet zu diesem Zweck ein mit der Kunststoffmatrix vorimprägniertes Gewebe 10 entsprechend der zu beschichteten Bereichsflächen des Metallträgers 3 zu. Der beschichtete Metallträger 3 wird in weiterer Folge einer Teilaushärtung mit Hilfe einer Trocknungs- bzw. Härtevorrichtung 11 unterworfen, wonach die Beschichtung 6 wenigstens eine blockfeste Oberfläche 12 ausbildet. Dadurch kann der Metallträger 3 ohne weiteres auch auf einen Stapel 13 aufgelegt und damit beispielsweise zwischengelagert oder für einen Weitertransport vorbereitet werden. Insbesondere aber kann damit ermöglicht werden, dass der beschichtete Metallträger 3 in einem weiteren Schritt zu einem Bauteil 2 umgeformt werden kann, da seine Beschichtung 6 in ihrer Aushärtung wenigstens eine blockfeste Oberfläche 12 ausbildet. So wird der beschichtete Metallträger 3 in ein Tiefziehwerkzeug 14 eingebracht und umgeformt. Da der Metallträger 3 höchstens bereichsweise auf einer seiner Metallträgerseiten beschichtet ist, wie dies der Fig. 1 zu entnehmen ist, kann auch eine vergleichsweise hohe plastische Verformbarkeit des Metallträgers 3 sichergestellt werden. Es können also selbst hohe Umformgrade versagensfrei erfüllt werden, wie dies beispielsweise bei einem Schweller oder Längsträger eines Kraftfahrzeugs erforderlich sein kann.

Wie in Fig. 1 ebenso zu erkennen, ist überall dort, wo der Metallträger 3 durch sein Tiefziehen einer plastischen Umformung unterliegt, ein beschichtungsfreier Bereich 15 vorgesehen. Es können aber auch entsprechend den Anforderungen weitere beschichtungsfreie Bereiche am Metallträger 3 vorhanden sein.

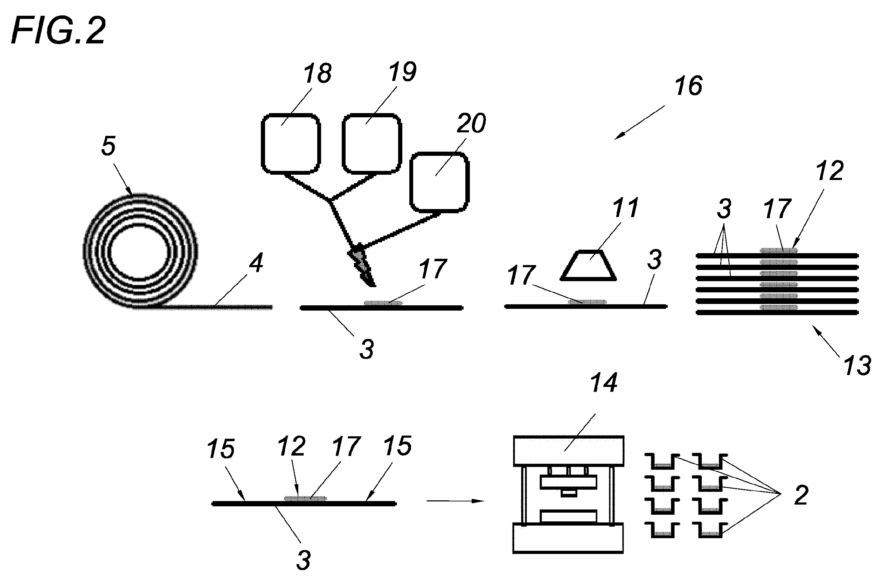

Zum Unterschied zu dem nach Fig. 1 dargestellten Verfahren 1 weist das Verfahren 16 nach Fig. 2 eine andere Art der Aufbringung einer Beschichtung 17 auf den Metallträger 3 auf. Harz 18 und Härter 19 werden in einem vorgegebenen Verhältnis mit Fasern 20, vorzugsweise Langfasern, gemischt und auf den Metallträger 3 appliziert. Anschließend erfolgt, gleich wie bei Fig. 1, eine blockfeste Aushärtung der Beschichtung 17 mit Hilfe einer Trocknungs- bzw. Härtevorrichtung 11. Die beschichteten Metallträger 3 können dann wieder auf einen Stapel 13 aufgelegt bzw. auch sofort einem Tiefziehen mit Hilfe des Tiefziehwerkzeugs 14 unterworfen werden, was nicht näher dargestellt worden ist.

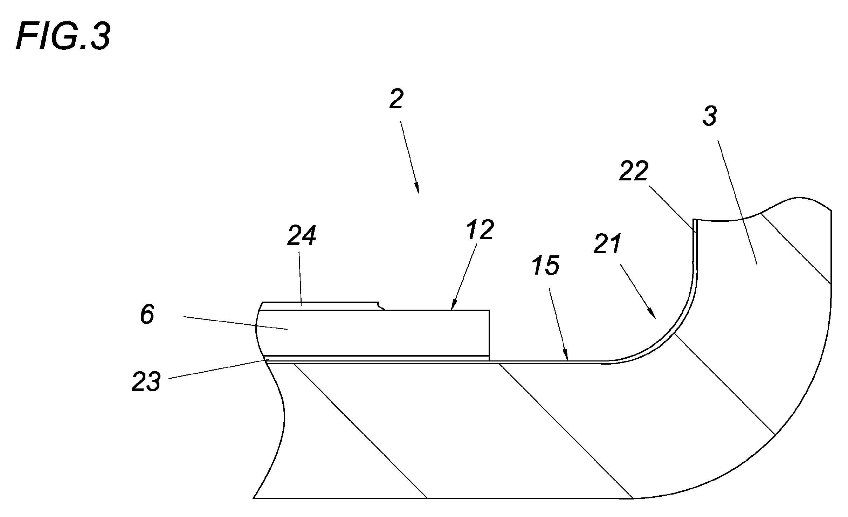

Gemäß Fig. 3 ist zu erkennen, dass der Metallträger 3 beschichtungsfreie Bereiche 15 aufweist, die beim Umformen die plastischen Formänderungen des Metallträgers 3 aufnehmen, welche den Umformradien 21 insbesondere Biegeradien folgen. Damit ist eine vergleichsweise hohe plastische Umformbarkeit des beschichteten Metallträgers 3 gewährleistet. Der Metallträger weist weiter eine metallisch und/oder organisch Schutzbeschichtung 22, beispielsweise eine Zinkschicht auf. Zudem ist zwischen der Beschichtung 6 und der Schutzbeschichtung 22 ein Haftvermittler 23 vorgesehen. Auf die Beschichtung 6 bzw. 7 ist noch eine Trennschicht 24 aufgebracht. Vorteilhafterweise kann das erfindungsgemäße Verfahren zur Optimierung der mechanischen Eigenschaften im Crashverhalten hinsichtlich des Stauch- bzw. Biegeverhaltens verwendet werden.

In Tabelle 1 werden beispielhaft die mechanischen Eigenschaften von nicht beschichteten und beschichteten Hutprofilen gegenübergestellt.

**Tabelle 1**

| | **Stahlblech** | **Stahlblech mit vorimprägniertem Gelege** | **Stahlblech mit nachträglich imprägniertem Gelege** |
|---|---|---|---|
| **Faservolumenanteil in der Polymermatrix** | - | 40 bis 70% | 35 bis 85% |
| **Blechdicke** | 1mm | 1mm | 1mm |
| **Beschichtungsdicke** | - | 1mm | 0,4 bis 0,6mm |
| Spezifische absorbierte Energie beim quasistatischem axialen Stauchen | 100% | > 125% | > 120% |
| Maximale Kraft beim 3-Punkt-Biegen | 100% | > 135% | > 120% |
| Absorbierte Energie beim 3-Punkt-Biegen | 100% | > 110% | > 120% |

Für die verschiedenen Belastungen wurden folgende Versuchsaufbauten gewählt:
Für das quasistatisches axiales Stauchen: ca. 50 % der Oberfläche mit FVK-Verstärkung;
Für die 3-Punkt-Biegung: ca. 15 % der Oberfläche mit FVK-Verstärkung;

Das quasistatische axiale Stauchen wurde bei einer Verformungsgeschwindigkeit von 30 mm/min bis zu einer Verformung von 60 % durchgeführt. Der 3-Punkt-Biegetest wurde bei einer Verformungsgeschwindigkeit von 30 mm/min durchgeführt mit einem maximalen Verfahrweg von 250 mm.

Trotz einer teilweisen Beschichtung der Hutprofile sind erhebliche Verbesserungen in der Belastbarkeit gegenüber einem nicht beschichteten Hutprofil festzustellen, ohne dass damit eine Einschränkung bei den erreichbaren Umformgraden in Kauf genommen werden muss.

In Tabelle 2 wird die Festigkeit eines ebenen Halbzeugs mit unterschiedlichen FVK-Beschichtungen im Vergleich zu herkömmlichen Stahlblechen verglichen. Die FVK Beschichtung weist vor dem Zugversuch bzw. Biegeversuch zumindest eine blockfeste Oberfläche auf.

**Tabelle 2**

| | **Stahlblech** | **Stahlblech mit vorimprägnierten Gelege** | **Stahlblech mit nachträglich imprägniertem Gelege** | **Stahlblech mit Langfasern in der Polymermatrix** |
|---|---|---|---|---|
| **Faservolumenanteil in der Polymermatrix** | - | 40 bis 70% | 35 bis 85% | 15 bis 50% |
| **Blechdicke** | 1mm | 1mm | 1mm | 1mm |
| **Beschichtungsdicke** | - | 1mm | 0,4 bis 0,6 mm | 0,5 bis 2mm |
| Festigkeit bei Zugversuch | 100% | > 195% (eine Lage) | > 210% (eine Lage) > 270% (zwei Lagen) | > 145% |
| Absorbierte Energie bei 3-Punkt-Biegen | 100% | > 231% | > 157% (eine Lage) > 209% (zwei Lagen) | > 176% |
| Spezifische absorbierte Energie bei 3-Punkt-Biegen | 100% | > 191% | > 151% (eine Lage) > 180% (zwei Lagen) | > 158% |

Die Aushärtung der FVK-Beschichtung erfolgte zwischen 20 und 130°C für 120 bis 500 Minuten. Vorzugsweise bei vorimprägnieren Gelege zwischen 90 und 130 °C für 90 bis 180 Minuten und bei nachträglich imprägnierten Gelege sowie auch bei der Verwendung von Langfasern zwischen 20°C und 60°C bei mindestens 480 Minuten.

Das Verhältnis von Metallträgerdicke zu Beschichtungsdicke hat sich in den Beispielen ein Bereich von 1:2 bis zu 1:0,4 als vorteilhaft erwiesen. Die Stahlblechdicke bzw. Blechdicke des jeweiligen Metallträgermaterials kann auch variiert werden, die Erfindung kann sich besonders bei einer Metallträgerdicke im Bereich von 0,6 bis 5 mm, insbesondere 1 bis 2,5 mm auszeichnen.

Insgesamt ist damit gezeigt, dass die Festigkeit um 10 bis 20% gesteigert werden konnte und dies überraschenderweise mit bereits relativ dünnen FVK Schichten im Bereich von 0,2 bis 3 mm, insbesondere 0,4 bis 2 mm Beschichtungsdicke. Eine Gesamtgewichtseinsparung beispielsweise einem Schweller oder Längsträger im Bereich von über 10% kann damit durchaus erreicht werden. Dies resultiert vorteilhafterweise in einem geringen Karosserie- bzw. damit einem geringeren Fahrzeuggesamtgewicht, welches sich ebenso in einem niedrigeren Treibstoffverbrauch widerspiegelt.

## Patentansprüche

1. Verfahren zur Herstellung eines Halbzeugs oder Bauteils (2), bei dem auf einen Metallträger (3), insbesondere einem Blech (4), eine aushärtbare Beschichtung (6, 17) mit faserverstärktem Kunststoff aufgebracht, und der beschichtete Metallträger (3) in einem weiteren Schritt zu einem Halbzeug oder Bauteil (2) umgeformt, insbesondere tiefgezogen oder gebogen, wird, **dadurch gekennzeichnet, dass** der Metallträger (3) höchstens bereichsweise beschichtet wird und dem Umformen erst dann unterworfen wird, wenn seine Beschichtung (6, 17) in ihrer Aushärtung wenigstens eine blockfeste Oberfläche (12) ausbildet, wobei der beschichtete Metallträger (3) derart umgeformt wird, dass sich dessen Umformradien (21) folgenden plastischen Formänderungen im Wesentlichen, vorzugsweise ausschließlich, in seinen beschichtungsfreien Bereichen (15) ausbilden.

2. Verfahren nach Anspruch 1, **dadurch gekennzeichnet, dass** kohlenstofffaserverstärkter Kunststoff als faserverstärkter Kunststoff mit insbesondere einer duroplastischen Matrix auf den Metallträger (3) aufgebracht wird.

3. Verfahren nach Anspruch 2, **dadurch gekennzeichnet, dass** vorimprägnierte Carbonfasern aufgebracht werden.

4. Verfahren nach Anspruch 1, 2 oder 3, **dadurch gekennzeichnet, dass** faserverstärkter Kunststoff mit einer chemisch vernetzten Zwischenschicht auf den Metallträger (3) aufgebracht wird.

5. Verfahren nach einem der Ansprüche 1 bis 4, **dadurch gekennzeichnet, dass** der Langfasern aufweisende faserverstärkte Kunststoff auf den Metallträger (3) aufgebracht wird.

6. Verfahren nach einem der Ansprüche 1 bis 5, **dadurch gekennzeichnet, dass** ein Gewebe oder Gelege des faserverstärkten Kunststoffs in zugeschnittener Form (8) auf den Metallträger (3) aufgebracht wird.

7. Verfahren nach Anspruch 6, **dadurch gekennzeichnet, dass** das Gewebe oder Gelege entweder mit der Kunststoffmatrix vorimprägniert auf den Metallträger (3) aufgebracht wird, oder nach dem Aufbringen auf den Metallträger (3) mit der Kunststoffmatrix imprägniert wird.

8. Verfahren nach einem der Ansprüche 1 bis 7, **dadurch gekennzeichnet, dass** die Beschichtung (6, 17) auf einen metallisch und/oder organisch vorbeschichteten Metallträger (3), eventuell unter Vorbehandlung mit einem Haftvermittler, aufgebracht wird.

9. Verfahren nach einem der Ansprüche 1 bis 8, **dadurch gekennzeichnet, dass** mehrere Lagen an Gewebe oder Gelege für einen insbesondere multidirektionalen Schichtaufbau des faserverstärkten Kunststoffs übereinander gelegt werden.

10. Verfahren nach einem der Ansprüche 1 bis 9, **dadurch gekennzeichnet, dass** vor dem Umformen auf die Beschichtung (6, 17) eine Trennschicht (24) aufgebracht wird.

11. Verfahren nach einem der Ansprüche 1 bis 10, **dadurch gekennzeichnet, dass** der Metallträger (3), insbesondere ein Stahlblech (4), eine Blechdicke von 0,6 bis 5 mm, insbesondere 1 bis 2,5 mm aufweist.

12. Verfahren nach einem der Ansprüche 1 bis 11, **dadurch gekennzeichnet, dass** die Beschichtung (6, 17) eine Dicke von 0,2 bis 3 mm, insbesondere 0,4 bis 2 mm aufweist.

13. Verfahren nach einem der Ansprüche 1 bis 12, **dadurch gekennzeichnet, dass** die aushärtbare Beschichtung (6, 17) drucklos vorgeliert und in einem weiteren Schritt an den Metallträger (3) angedrückt wird, um diese auf den Metallträger (3) aufzubringen.

14. Verwendung des Verfahrens nach einem der Ansprüche 1 bis 13 zur Herstellung eines tragenden Strukturbauteils, insbesondere Schweller oder Längsträger, eines Kraftfahrzeugs.

## Claims

1. Method for the production of a semi-finished product or component (2), in which a hardenable coating (6, 17) with fiber-reinforced plastic is applied to a metal support (3), particularly a sheet metal (4), and the coated metal support (3) is formed, particularly deep-drawn or bent, in a further step, to produce a semi-finished product or component (2), **characterized in that** the metal support (3) is coated at most in certain regions, and is only subjected to forming once its coating (6, 17) has hardened to form at least a block-resistant surface (12), wherein the coated metal support (3) is formed in such a manner that its plastic changes in shape, which follow forming radii (21), form essentially, preferably exclusively, in its coating-free regions (15).

2. Method according to claim 1, **characterized in that** carbon-fiber-reinforced plastic is applied to the metal support (3), particularly with a duroplastic matrix, as the fiber-reinforced plastic.

3. Method according to claim 2, **characterized in that** pre-impregnated carbon fibers are applied.

4. Method according to claim 1, 2 or 3, **characterized in that** fiber-reinforced plastic is applied to the metal support (3) with a chemically cross-linked intermediate layer.

5. Method according to one of claims 1 to 4, **characterized in that** the fiber-reinforced plastic, which has long fibers, is applied to the metal support (3).

6. Method according to one of claims 1 to 5, **characterized in that** a woven fabric or laid scrim of the fiber-reinforced plastic is applied to the metal support (3) in cut-to-size form (8).

7. Method according to claim 6, **characterized in that** the woven fabric or laid scrim is either applied to the metal support (3) pre-impregnated with the plastic matrix, or impregnated with the plastic matrix after application to the metal support (3).

8. Method according to one of claims 1 to 7, **characterized in that** the coating (6, 17) is applied to a metallically and/or organically precoated metal support (3), possibly with previous treatment using an adhesion-promoting agent.

9. Method according to one of claims 1 to 8, **characterized in that** multiple plies of woven fabric or laid scrim are laid one on top of the other for a particularly multidirectional layer structure of the fiber-reinforced plastic.

10. Method according to one of claims 1 to 9, **characterized in that** a parting layer (24) is applied to the coating (6, 17) before forming.

11. Method according to one of claims 1 to 10, **characterized in that** the metal support (3), particularly a steel sheet (4), has a sheet thickness of 0.6 to 5 mm, more particularly 1 to 2.5 mm.

12. Method according to one of claims 1 to 11, **characterized in that** the coating (6, 17) has a thickness of 0.2 to 3 mm, particularly 0.4 to 2 mm.

13. Method according to one of claims 1 to 12, **characterized in that** the hardenable coating (6, 17) is pre-gelled without pressure and is pressed onto the metal support (3) in a further step, in order to apply it to the metal support (3).

14. Use of the method according to one of claims 1 to 13 for the production of a supporting structural component, particularly a rocker panel or side member, of a motor vehicle.

## Revendications

1. Procédé pour la fabrication d'un semi-produit ou d'une pièce (2), dans lequel un revêtement durcissable (6, 17) avec un plastique armé de fibres est appliqué sur un support métallique (3), en particulier une tôle (4), et le support métallique (3) revêtu est mis en forme dans une étape suivante pour donner un semi-produit ou une pièce (2), en particulier embouti par emboutissage profond ou plié, **caractérisé en ce que** le support métallique (3) est revêtu au maximum par zones et n'est mis en forme que lorsque son revêtement (6, 17) forme en durcissant une surface solide d'un seul tenant (12), le support métallique (3) revêtu étant mis en forme de telle façon que des déformations plastiques suivant ses rayons de formage (21) se produisent pour l'essentiel, de préférence uniquement, dans ses zones sans revêtement (15).

2. Procédé selon la revendication 1, **caractérisé en ce que** le plastique armé de fibres appliqué sur le support métallique (3) est un plastique armé de fibres de carbone avec en particulier une matrice de plastique thermodurcissable.

3. Procédé selon la revendication 2, **caractérisé en ce que** des fibres de carbone préimprégnées sont appliquées.

4. Procédé selon la revendication 1, 2 ou 3, **caractérisé en ce que** du plastique armé de fibres avec une couche intermédiaire polymérisée par voie chimique est appliqué sur le support métallique (3).

5. Procédé selon l'une des revendications 1 à 4, **caractérisé en ce que** le plastique armé de fibres présentant des fibres longues est appliqué sur le support métallique (3).

6. Procédé selon l'une des revendications 1 à 5, **caractérisé en ce qu'**une toile ou une nappe de plastique armé de fibres est appliquée sous forme découpée (8) sur le support métallique (3).

7. Procédé selon la revendication 6, **caractérisé en ce que** la toile ou la nappe est soit appliquée sur le support métallique (3) après avoir été préimprégnée de la matrice de plastique, soit imprégnée de la matrice de plastique après son application sur le support métallique (3).

8. Procédé selon l'une des revendications 1 à 7, **caractérisé en ce que** le revêtement (6, 17) est appliqué sur un support métallique (3) revêtu au préalable d'une couche métallique et/ou organique, éventuellement avec un prétraitement avec un activateur d'adhérence.

9. Procédé selon l'une des revendications 1 à 8, **caractérisé en ce que** plusieurs couches de toile ou de nappe sont superposées pour obtenir une structure de couches, en particulier multidirectionnelle, du plastique armé de fibres.

10. Procédé selon l'une des revendications 1 à 9, **caractérisé en ce qu'**une couche de démoulage (24) est appliquée sur le revêtement (6, 17) avant le formage.

11. Procédé selon l'une des revendications 1 à 10, **caractérisé en ce que** le support métallique (3), en particulier en tôle d'acier (4), présente une épaisseur de tôle de 0,6 à 5 mm, en particulier de 1 à 2,5 mm.

12. Procédé selon l'une des revendications 1 à 11, **caractérisé en ce que** le revêtement (6, 17) présente une épaisseur de 0,2 à 3 mm, en particulier de 0,4 à 2 mm.

13. Procédé selon l'une des revendications 1 à 12, **caractérisé en ce que** le revêtement durcissable (6, 17) est gélifié au préalable sans pression puis pressé sur le support métallique (3) dans une étape suivante afin de l'appliquer sur le support métallique (3).

14. Utilisation du procédé selon l'une des revendications 1 à 13 pour la fabrication d'une pièce de structure portante, en particulier un seuil de porte ou un longeron, d'un véhicule à moteur.
